# EUROPEAN PATENT APPLICATION

(11) **EP 4 122 628 A1**
(43) Date of publication of application: **25.01.2023**
(21) Application number: 21382652.2
(22) Date of filing: 19.07.2021
(51) Int. Cl.: B23B 29/02

(54) **SUPPORT ASSEMBLY FOR PROVIDING SUPPORT TO A BORING BAR**

(71) Applicant: Fundación Tekniker, 20600 Eibar (Guipuzkoa) (ES)
(72) Inventor: GONZALO DE FRANCISCO, OSCAR, 20600 Eibar (Guipúzcoa) (ES); CUEVAS ETTCHETO, ASIER, 20600 Eibar (Guipúzcoa) (ES); GARMENDIA OTAEGUI, KEPA, 20600 Eibar (Guipúzcoa) (ES)
(74) Representative: Balder IP Law, S.L.

(57) **Abstract**

Internal steady rest support for self-centering of a boring bar in a rotational workpiece. The support can be adapted to different internal diameters of a workpiece and the contact or support diameter can be modified during processing or machining to adapt the supporting area for non-cylindrical bottle bore geometries. The support comprises three arms (230, 240) that can be actuated to achieve a target diameter or can be controlled in force. The contact points (1) allow the axial sliding of the steady rest and the relative rotation following the workpiece. The support is actuated with an internal mechanism comprising pushing rods (7) acting on a mobile sleeve (4) to achieve the variable contact or support diameter.

## Description

### Field of disclosure

This disclosure relates to an internal centering and support system for boring cutting tools particularly, though not exclusively, for a numerically controlled tool and a rotary workpiece to perform, for example, bottle boring operations in shafts.

### Background of the disclosure

The manufacturing of precision shafts (for example, those used in aircraft engines) is a challenging manufacturing process, especially to achieve tighter requirements related to accuracy, performance and repeatability in a cost-effective way.

Machining processes for aeroengine components are driven by the material, the geometry and the specific requirements attending to the function of the component. The size, weight, aspect ratio and rigidity of each component affect the manufacturing process.

Regarding the shafts, these require specific multi-purpose mill/turn machine tools to cope with internal machining of the bore area and to allow efficient machining of turned, milled and drilled features in one set up. The main targets of the manufacturing processes are a high Length to Diameter (L/D) ratio, high material removal rate, good surface integrity, small wall thickness and tight geometrical tolerances.

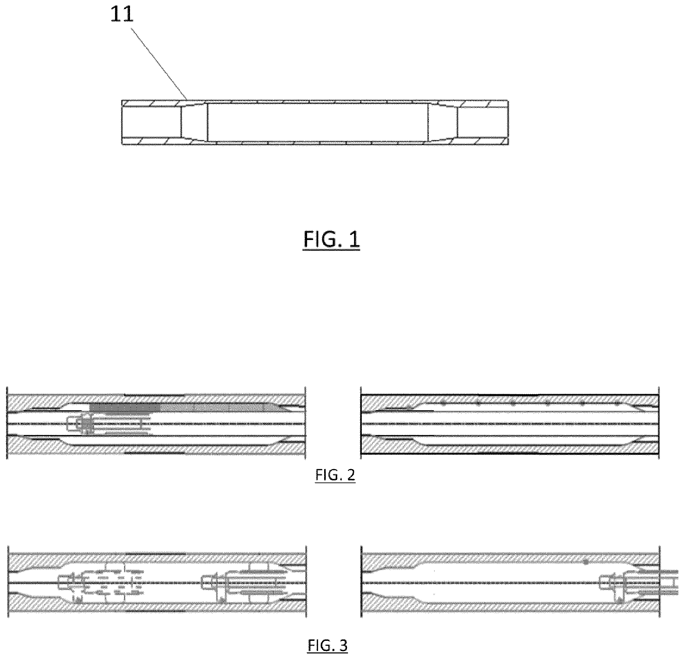

The geometry of these shafts is characterized by inside bottle bores, that consist in a bore with an inside diameter along a length of the bore of the shaft greater than the diameter in the tip ends of the bore of the shaft, as shown in figure 1.

The machining of these bottle bores is performed with large boring bars located concentric to the workpiece in numerically controlled machines to perform the axial movement along the bore, and an additional axis for the radial movement of the cutting tool. This kind of systems allows bottle boring operations on large shafts using both approaches, rotating tool or rotating workpiece. The radial movement of the cutting tool is achieved using an inner quill actuated from the fixed point of the boring bar.

The manufacturing of bottle bore shafts is challenged by the need of "bottle" geometries, large length/diameter ratio, low thickness and surface integrity related requirements. This kind of machining operations results in long and slender tools prone to vibration during the process, so self-supporting internal pads are used to improve the stability, to provide a higher stiffness to the tool during operation, to provide guidance and to minimize the vibration of the tool, improving the surface quality of a workpiece. These pads contact the workpiece in a fixed diameter of the workpiece, leading to the need of a uniform internal diameter in the stock workpiece. The pads are usually included in the form of contact pads or piloted supports acting at a fixed diameter. The supporting pads commonly have a small stroke to allow the release and support of the workpiece, being the most common mechanism to actuate the pads an internal hydraulic pressure. This results in the need of constant diameter bores in the stock material previous to the final machining of the bottle bore.

The use of the supporting pads with fixed diameter leads to machining strategies like segmented machining, illustrated in figure 2, or continuous machining, illustrated in figure 3.

In segmented machining, the initial supporting bore is used by stretches, performing several passes in the same stretch to achieve the final diameter. In other words, starting from the initial supporting bore to achieve the final diameter bore, machining is performed in sequential stretches, each stretch starting from the initial supporting bore to the final diameter bore; thus, the final diameter bore is achieved by successive stretches, each stretch machining the workpiece from the initial supporting bore to the final diameter bore, the stretches being performed one after the other along a longitudinal direction of the workpiece. After all the successive stretches have been performed, the succession of the stretches, longitudinally aligned, form the final shape of the workpiece.

In continuous machining, the initial supporting bore allows a continuous machining obtaining the final shape of the workpiece; this is normally used with low depths of cut or for finishing operations. In other words, starting from the initial supporting bore to achieve the final diameter bore, machining is performed by extending each stretch along the whole length of the bore; thus, each stretch is performed along the whole length of the bore and the following stretch is performed increasing the diameter over the preceding stretch. After all the stretches are performed, the final diameter bore is achieved.

A simplification of the segmented machining and the continuous machining could be considered as follows:
- the segmented machining is a succession of cylinders aligned one after the other longitudinally, each cylinder corresponding to each stretch, from the initial supporting bore to the final diameter bore;
- the continuous machining is a succession of concentrical cylinders where each cylinder extends along the whole length of the workpiece; thus, the final diameter bore is achieved from the initial supporting bore by successively increasing the diameter of the bore in each stretch which extends along the whole length of the bore.

Due to the position of the pads near the cutting tool to maximize the stiffness of the cutting tool, the segmented operations are normally used with several passes to achieve the final diameter, resulting in discontinuities in the machining process and marks in the workpiece that can be unacceptable in certain applications (i.e. aeronautic engines). While the continuous machining drives to the use of large cutting depths if a large diameter bottle bore is required, it could be limited due to vibrations or jeopardizing the cutting tool strength.

The state of the art in the tooling systems for bottle bore geometries with high L/D ratio is represented by the products offered by companies like COGSDILL, BGTB, UNISIG, ITS TOOLING or BTA HELLER.

The design of the boring bar is normally modular to be adapted to different lengths including one or several sets of pads or piloted supports.

The support pads commonly used are indexable elements that are replaced after wear. The shape of this is adapted to the expected diameter of the workpiece.

US10201861B2 and EP2946862A1 disclose fixed diameter indexable pads.

US8506210B2 discloses a guide pad that is radially adjustable between a first radial position and a second radial position by a differential pressure across the guide pad. The differential pressure is created by an actuation fluid supplied to one side of the guide pad. US5865573A discloses a similar concept with multiple pressurized pads to force the contact between them and a predefined diameter of the workpiece.

US20110079120A1 discloses a set of contact elements that can roll in the axial direction, being radially actuated by a hydraulic piston and wedge mechanism. This provides a support with variable contact diameter.

CN109877606B discloses an adjustable radial contact support with a wedge mechanism that is manually fixed. It also includes a bushing system to allow relative rotation between the workpiece fixed and the tool.

RU2542045C1 -discloses an internal self-centering rest that can be displaced along the axial direction. It includes a linked mechanism and a wedge type system to provide a variable supporting diameter. The contact points of the centering elements are loaded by springs to ensure the contact.

### Summary of the disclosure

The present disclosure is directed to a bottle boring tool and similar systems that work inserted into a bore of a shaft. It is moved axially along the shaft to perform the internal machining processes to obtain bottle bore shapes. In order to improve the stiffness of the tool and precision of the machining process, internal supports are used, normally in the form of supporting contact pads.

The present disclosure is designed for bottle-type hollow profiles. The problem to be solved by the present disclosure may be formulated as how to:
- provide a support for machining of interiors in tubes.
- increase the rigidity of the machining tool and achieve machining more slender elements.

The present disclosure provides a new and improved self-centering internal support system able to provide a variable contact or support diameter also centering the tool with respect to the bore of the workpiece. The system is mechanically or electromechanically actuated and comprises a plurality of arms that move the pads or wheels to contact the workpiece, being the movement of the different arms synchronized to achieve a uniform contact or support diameter. Once opened, and in contact with the workpiece, the self-centering internal support can be displaced axially along the workpiece surface adapting its contact or support diameter to that of the workpiece.

This disclosure overcomes the disadvantages of the prior art and provides an internal support able to be adapted to a non-cylindrical surface, adapting its contact or support diameter during the machining operation. This provides a suitable way to perform continuous finishing processes instead of segment processes.

The support assembly provides additional stiffness to the tool to guarantee the precision and the stability of the machining process reducing deformation and vibrations in the tool system.

To achieve a self-centering support without redundancy, 3 contact points separated 120º in the circumferential direction may be used, but more contact points and different separation angles could also be used.

Thus, the present disclosure comprises the following new features:
- Variable contact or support diameter.
- A non-rotating central portion of the tool allows passage of auxiliary elements (cables, pipes, other elements of action ...).
- Electromechanical action.
- 3 operating modes:
   ∘ By motor power.
   ∘ With CNC position control.
   ∘ With force control with feedback sensor.

Some of the advantages of the present disclosure are:
- Increase the slenderness of the machined parts as the machining tool (boring bar) is stiffened.
- Improving the precision of the machining.

### Brief description of the drawings

Fig. 1 shows a typical workpiece which is a shaft with a bottle bore shape which can be manufactured with a tool including the mechanism of the disclosure.
Fig. 2 shows a segment machining operation and Fig. 3 shows a continuous machining operation.

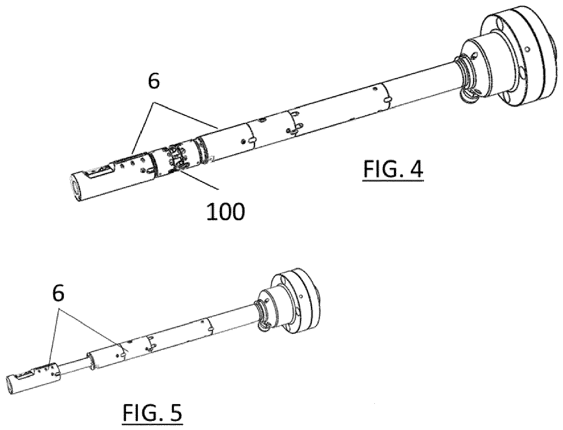

Fig. 4 shows a tool including the mechanism of the disclosure.
Fig. 5 shows a tool without the internal support assembly of the disclosure.
Fig. 6 shows the internal support assembly of the disclosure.
Fig. 7 shows a boring bar with the support system in the retracted position (low diameter support).
Fig. 8 shows a boring bar with the support system in the extended position (large diameter support).
Fig. 9 shows a section view of the boring bar with the support system in the extended position.
Fig. 10 shows a boring bar with the support system and the linear actuation assembly.
Fig. 11 shows a detail of the support system and the linear actuation assembly.

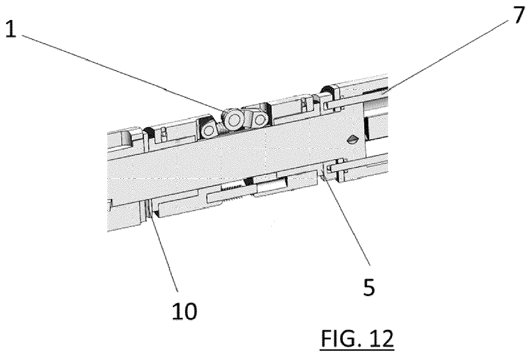

Fig. 12 shows a detail of the support system.
Fig. 13 shows a detail of the support system having contact pads.

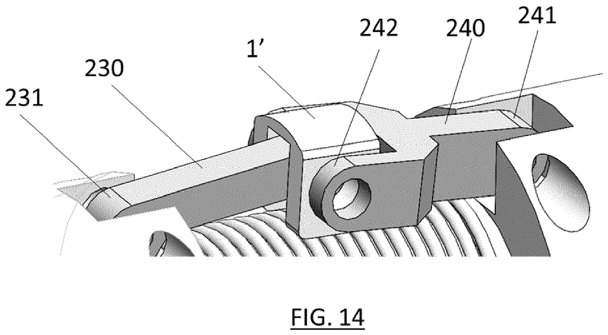

Fig. 14 shows a detail of a contact pad.
Fig. 15 shows a detail of the support system having contact rollers.

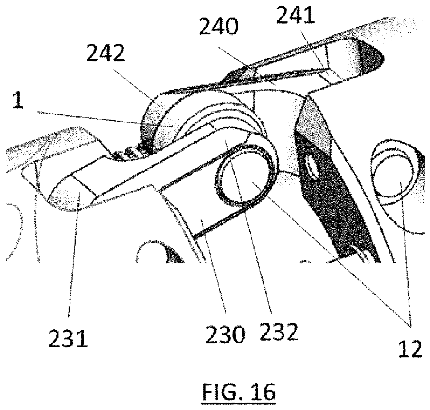

Fig. 16 shows a detail of a contact roller.

### Detailed description of the disclosure

The disclosure relates to a support assembly (100) for providing support to a boring bar on a workpiece (11) comprising:
a plurality of rollers (1) or pads (1') configured to be placed on a machining surface of the workpiece (11);
wherein the support assembly (100) comprises:
a retractile mechanism located along a longitudinal section of a tool body (6) wherein the retractile mechanism comprises:
an anvil housing (3) configured to spin at the workpiece (11) speed;
a hammer housing (4), axially adjacent to the anvil housing (3), configured to spin at the workpiece (11) speed and to be guided along an axial movement in the tool body (6) between an axially proximal position and an axially distal position with respect to the anvil housing (3);
a plurality of couples of links (230, 240) linking the anvil housing (3) to the hammer housing (4) by opposing faces of the anvil housing (3) and the hammer housing (4), each couple of links (230, 240) having:
   an anvil link (230) having an anvil link first end (231) articulated to the anvil housing (3);
   a hammer link (240) having a hammer link first end (241) articulated to the hammer housing (4);
   the anvil link (230) and the hammer link (240) being connected to each other on an anvil link second end (232) opposite the anvil link first end (231) and a hammer link second end (242) opposite the hammer link first end (241) in an articulation and having a pad (1) or roller (1') in the articulation connecting the anvil link (230) and the hammer link (240);
so that:
the couples of links (230, 240) are compressed and the anvil link second end (232) and the hammer link second end (242) place the rollers (1) or pads (1') in a working position configured to contact the workpiece (11) when the hammer housing (4) is in the proximal position with respect to the anvil housing (3); when the second ends of the anvil link (230), the hammer link (240) and the rollers (1) or pads (1') are in the working position, radial protrusion of the second ends of the anvil link (230), the hammer link (240) and the rollers (1) or pads (1') over the tool body (6) is apparent;
the couples of links (230, 240) are stretched and the second ends of the anvil link (230) and the hammer link (240) place the rollers (1) or pads (1') in an idle position configured to avoid contact to the workpiece (11) when the hammer housing (4) is in the distal position with respect to the anvil housing (3); when the second ends of the anvil link (230), the hammer link (240) and the rollers (1) or pads (1') are in the idle position, radial protrusion of the second ends of the anvil link (230), the hammer link (240) and the rollers (1) or pads (1') over the tool body (6) is negligible;
movement to the hammer housing (4) is provided by pushing rods (7) configured to be axially moved.

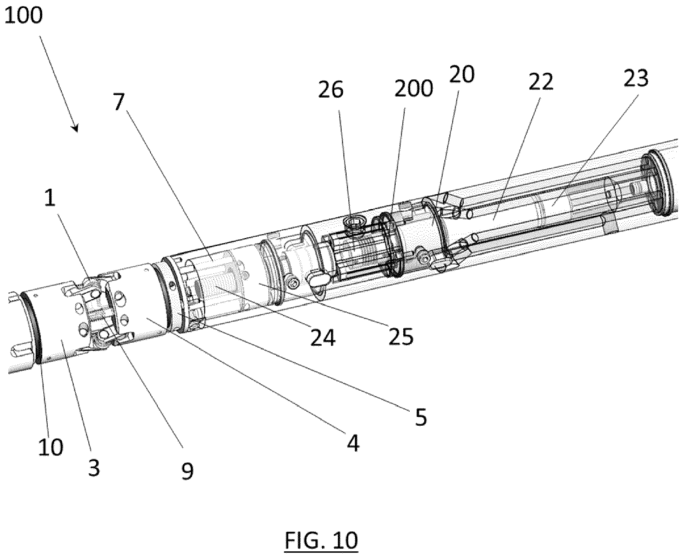

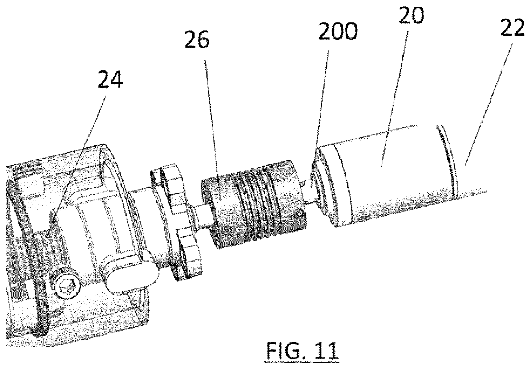

As show in Figs. 10 and 11, the support assembly (100) may also comprise:
a linear actuation assembly configured to move the hammer housing (4) comprising:
a nut (25) configured to be axially moved along an axial movement inside the tool body (6) to axially move the pushing rods (7);
a screw (24) configured to spin along an axial axis in the tool body (6) to axially move the nut (25) inside the tool body (6);
a reduction gearbox (20) configured to provide the screw (24) with a spinning speed and a torque suitable for the axial movement of the hammer housing (4);
a coupler (26) to couple an output shaft (200) of the reduction gearbox (20) to the screw (24);
a motor (22) configured to generate a spinning movement of the screw (24); and
an encoder (23) configured to control an angular position of the motor (22).

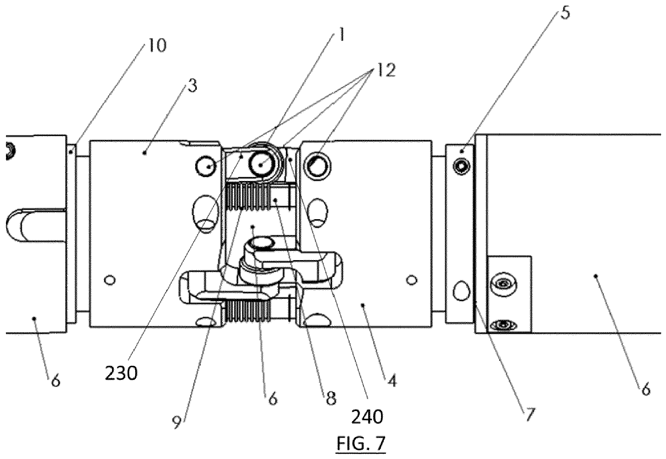

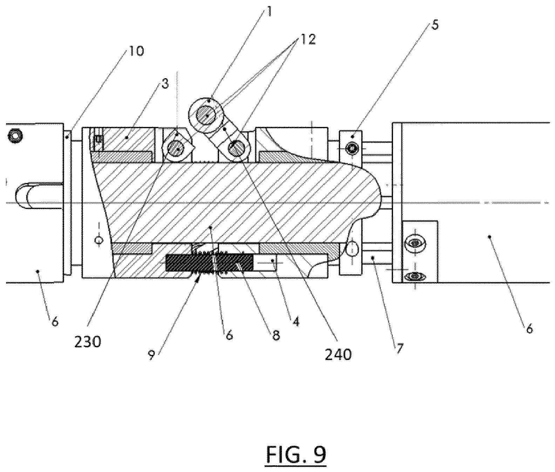

As show in Figs. 7, 8, 9 and 10 the support assembly (100) may also comprise:
a rotating bushing (10) between the anvil housing (3) and the tool body (6) configured to allow rotation of the anvil housing (3) with respect to the tool body (6);
an axial and rotating bushing (5) between the hammer housing (4) and the tool body (6) configured to allow rotation and axial movement of the hammer housing (4) with respect to the tool body (6);

The support assembly (100) may also comprise:
a rotating bearing between the anvil housing (3) and the tool body (6) configured to allow rotation of the anvil housing (3) with respect to the tool body (6);
an axial and rotating bearing between the hammer housing (4) and the tool body (6) configured to allow rotation and axial movement of the hammer housing (4) with respect to the tool body (6);

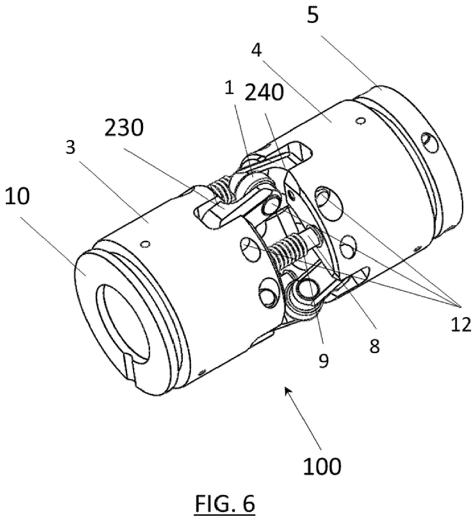

As show in Figs. 6, 7, 8 and 9 the support assembly (100) may also comprise:
a plurality of guiding rods (8) between the anvil housing (3) and the hammer housing (4) to guide the axial movement of the hammer housing (4).

As show in Figs. 6, 7, 8 and 9 elements selected from:
the couples of links (230, 240);
the guiding rods (8);
the pushing rods (7);
the springs (9)
and combinations thereof;
are circumferentially distributed in a uniform spacing on the opposing faces of the anvil housing (3) and the hammer housing (4).

The disclosure also relates to a boring tool comprising the support assembly (100) according to the description above.

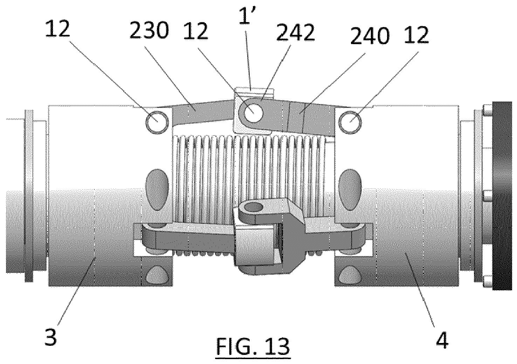

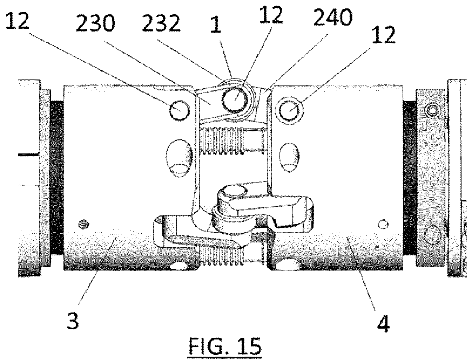

The support rollers (1) or pads (1') are actuated by the movement of the links (230, 240) and the housings (3, 4), being the relative movement of the links (230, 240) articulated with axles (12) as shown in Figs. 13 and 15. The self-centering support assembly allows the establishment of contact between the support rollers (1) or pads (1') and the workpiece (11) shown in Fig. 1.

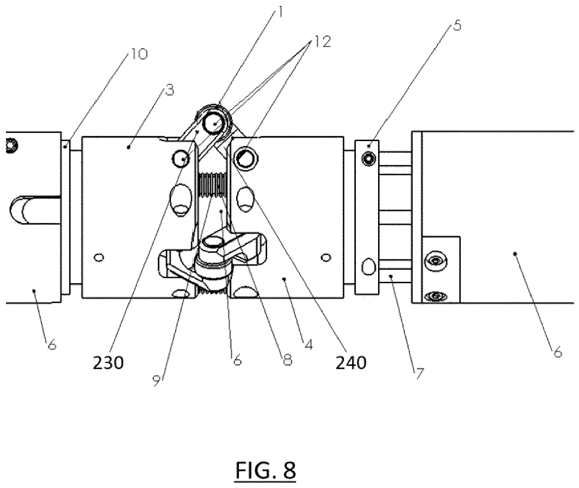

As show in Figs. 6, 7, 8, 9 and 10 the housings (3, 4) include an axial and rotating bushing (5) and a rotating bushing (10). The bushings (5, 10) are configured to allow a relative movement between the tool body (6) and the housings (3, 4). Said relative movement between the tool body (6) and the housings (3, 4) is allowed by conjugated mating contact surfaces on the tool body (6) and the bushings (5, 10). The axial and rotating bushing (5) is connected to the actuating pushing rods (7) as show in Figs. 8, 9 and 10. The bushings (5, 10) allow a free rotation between the support assembly (100) and the tool body (6) to ensure a non-sliding circumferential contact between the support rollers (1) or pads (1') and the workpiece (11) to avoid the friction wear in the contact between the support rollers (1) or pads (1') and the workpiece (11), leading to an improved surface finishing of the workpiece (11).

The bushings (10, 5) could be substituted by bearings and modified housings (3, 4) to include the bearings, but the bushings system allows a smaller size of the support assembly (100) to work with smaller tools body diameters.

The housings (3, 4) are connected to each other by means of three guiding rods (8) to fix the relative circumferential position of the housings (3, 4), and springs (9) between the housings (3, 4) and concentric with the guiding rods (8) provide a force to close the support assembly (100) once the actuation is released as show in Figs. 6, 7, 8 and 9. The housings (3, 4) are called in this disclosure anvil housing (3) and hammer housing (4) according to the relative movement between housings (3, 4). Thus, in a similar fashion as an anvil is a static part and a hammer is moved relative to an anvil in an anvil-hammer assembly, the present disclosure shows a relative movement between the housings (3, 4) where a housing can be considered the static housing, hence, the anvil housing (3), and the other housing can be considered the moving housing, hence, the hammer housing (4). The guiding rods (8), the links (230, 240) and the tool body (6) ensure the synchronized movement of the support rollers (1) or pads (1') to achieve an appropriate contact or support diameter at different positions of the support extension mechanism, as the support extension mechanism can be positioned in any position along its whole stroke, from the innermost position to the outermost position, as well as in all the intermediate positions. Also, the support extension mechanism is configured to be adapted to shapes of the support hole that are not cylindrical.

The pushing rods (7) can be actuated in different ways (mechanically, electromechanically, hydraulically or pneumatically) to obtain a continuous movement of the support to fit the diameter of the workpiece (11). The actuation system is included in the tool body (6) providing an axial linear movement to the pushing rods (7) that push the hammer housing (4) and approaches it to the anvil housing (3), resulting in a radial displacement of the support rollers (1) or pads (1') through the linked mechanism of the arms/links (230, 240) that increase the contact or support diameter provided by the support rollers (1) or pads (1'). When the actuation mechanism is released, the hammer housing (4) moves away from the anvil housing (3) by the acting force provided by the springs (9) reducing the contact or support diameter provided by the support rollers (1) / pads (1').

The support rollers (1) or pads (1') are the elements in contact with the workpiece (11) during the operation, with a relative displacement when the tool is moved axially along the workpiece (11). The support rollers (1) allow a rolling contact with the workpiece (11), while the pads (1') provide a sliding contact.

## Claims

1. A support assembly (100) for providing support to a boring bar on a workpiece (11) comprising:
a plurality of rollers (1) or pads (1') configured to be placed on a machining surface of the workpiece (11);
**characterized in that** the support assembly (100) comprises:
a retractile mechanism located along a longitudinal section of a tool body (6) wherein the retractile mechanism comprises:
an anvil housing (3) configured to spin at the workpiece (11) speed;
a hammer housing (4), axially adjacent to the anvil housing (3), configured to spin at the workpiece (11) speed and to be guided along an axial movement in the tool body (6) between an axially proximal position and an axially distal position with respect to the anvil housing (3);
a plurality of couples of links (230, 240) linking the anvil housing (3) to the hammer housing (4) by opposing faces of the anvil housing (3) and the hammer housing (4), each couple of links (230, 240) having:
an anvil link (230) having an anvil link first end (231) articulated to the anvil housing (3);
a hammer link (240) having a hammer link first end (241) articulated to the hammer housing (4);
the anvil link (230) and the hammer link (240) being connected to each other on an anvil link second end (232) opposite the anvil link first end (231) and a hammer link second end (242) opposite the hammer link first end (241) in an articulation and having a pad (1) or roller (1') in the articulation connecting the anvil link (230) and the hammer link (240);
so that:
the couples of links (230, 240) are compressed and the anvil link second end (232) and the hammer link second end (242) place the rollers (1) or pads (1') in a working position configured to contact the workpiece (11) when the hammer housing (4) is in the proximal position with respect to the anvil housing (3);
the couples of links (230, 240) are stretched and the second ends of the anvil link (230) and the hammer link (240) place the rollers (1) or pads (1') in an idle position configured to avoid contact to the workpiece (11) when the hammer housing (4) is in the distal position with respect to the anvil housing (3);
movement to the hammer housing (4) is provided by pushing rods (7) configured to be axially moved.

2. A support assembly (100) according to claim 1 **characterized in that** it comprises:
a linear actuation assembly configured to move the hammer housing (4) comprising:
a nut (25) configured to be axially moved along an axial movement inside the tool body (6) to axially move the pushing rods (7);
a screw (24) configured to spin along an axial axis in the tool body (6) to axially move the nut (25) inside the tool body (6);
a reduction gearbox (20) configured to provide the screw (24) with a spinning speed and a torque suitable for the axial movement of the hammer housing (4);
a coupler (26) to couple an output shaft (200) of the reduction gearbox (20) to the screw (24);
a motor (22) configured to generate a spinning movement of the screw (24); and
an encoder (23) configured to control an angular position of the motor (22).

3. A support assembly (100) according to any of the preceding claims **characterized in that** it comprises:
a rotating bushing (10) between the anvil housing (3) and the tool body (6) configured to allow rotation of the anvil housing (3) with respect to the tool body (6);
an axial and rotating bushing (5) between the hammer housing (4) and the tool body (6) configured to allow rotation and axial movement of the hammer housing (4) with respect to the tool body (6).

4. A support assembly (100) according to any of claims 1 to 2 **characterized in that** it comprises:
a rotating bearing between the anvil housing (3) and the tool body (6) configured to allow rotation of the anvil housing (3) with respect to the tool body (6);
an axial and rotating bearing between the hammer housing (4) and the tool body (6) configured to allow rotation and axial movement of the hammer housing (4) with respect to the tool body (6).

5. A support assembly (100) according to any of the preceding claims **characterized in that** it comprises:
a plurality of guiding rods (8) between the anvil housing (3) and the hammer housing (4) to guide the axial movement of the hammer housing (4).

6. A support assembly (100) according to claim 5 **characterized in that** elements selected from:
the couples of links (230, 240);
the guiding rods (8);
the pushing rods (7);
the springs (9)
and combinations thereof;
are circumferentially distributed in a uniform spacing on the opposing faces of the anvil housing (3) and the hammer housing (4).

7. A boring tool **characterized in that** it comprises the support assembly (100) according to any of the preceding claims.
